(19) Europäisches Patentamt
European Patent Office
Office européen des brevets

(11) Veröffentlichungsnummer: **0 123 179**
**B1**

(12) # EUROPÄISCHE PATENTSCHRIFT

(45) Veröffentlichungstag der Patentschrift: **27.08.86**

(51) Int. Cl.⁴: **C 07 F 9/65**, A 01 N 57/24

(21) Anmeldenummer: **84103778.1**

(22) Anmeldetag: **05.04.84**

(54) **Phosphorylierte Azolyl-Derivate, Verfahren zu ihrer Herstellung sowie ihre Verwendung als Fungizide.**

(30) Priorität: **15.04.83 DE 3313719**

(43) Veröffentlichungstag der Anmeldung: **31.10.84 Patentblatt 84/44**

(45) Bekanntmachung des Hinweises auf die Patenterteilung: **27.08.86 Patentblatt 86/35**

(84) Benannte Vertragsstaaten: **AT BE CH DE FR GB IT LI NL SE**

(56) Entgegenhaltungen:
**EP - A - 0 015 387**
**DE - A - 3 046 329**

(73) Patentinhaber: **BAYER AG, Konzernverwaltung RP Patentabteilung, D-5090 Leverkusen 1 Bayerwerk (DE)**

(72) Erfinder: **Preuss, Reinhard, Dr., Oderstrasse 55, D-4150 Krefeld 11 (DE)**
Erfinder: **Perrey, Hermann, Dr., Auf der Rheinaue 8, D-4150 Krefeld 11 (DE)**
Erfinder: **Ritter, Helmut, Prof. Dr., Hohenholz 32, D-5600 Wuppertal 1 (DE)**
Erfinder: **Reinecke, Paul, Dr., Lessingstrasse 11, D-5090 Leverkusen 3 (DE)**
Erfinder: **Brandes, Wilhelm, Dr., Eichendorffstrasse 3, D-5653 Leichlingen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die vo-liegende Erfindung betrifft phosphorylierte Azolyl-Cerivate, ein Verfahren zu ihrer Herstellung sowie ihre Verwendung als Fungizide.

Es ist bereits bekannt geworden, dass bestimmte acylierte Triazolyl-Derivate, wie beispielsweise 1-Chlorphenoxy-3,3-dimethyl-2-ethylcarbonyloxy- bzw. -2-acetoxy- bzw. -2-phenoxyacetoxy-1-(1,2,-4-triazol-1-yl)-butan oder 3-Acetoxy-1-cyclohexyl-4,4-dimethyl-2-(1,2,4-triazol-1-yl)-1-penten, gute fungizide Eigenschaften aufweisen (vergleiche DE-OS 2 600 799 und EP 0 015 387). Die Wirkung dieser Verbindungen ist jedoch, insbesondere bei niedrigen Aufwandmengen und -konzentrationen, nicht immer voll befriedigend.

Ferner sind aus der DE-A1-3 046 329 Phosphinsäurederivate des Triazols und Imidazols bekannt, welche im Phosphinylrest ausschliesslich durch aliphatische/cycloaliphatische Kohlenwasserstoffreste substituiert sind; sie können im Pflanzenschutz Verwendung finden.

Es wurden phosphorylierte Azolyl-Derivate der allgemeinen Formel

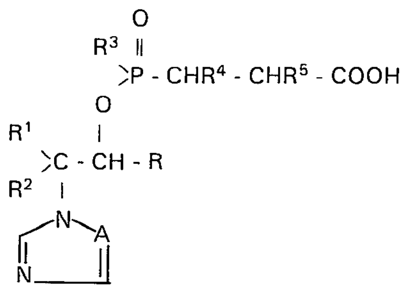

(I)

in welcher

A für ein Stickstoffatom oder die CH-Gruppe steht,

R für gegebenenfalls substituiertes Phenyl oder die Gruppierung

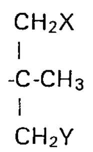

steht, wobei

X und Y gleich oder verschieden sind und für Wasserstoff oder Halogen stehen,

$R^1$ für Wasserstoff und

$R^2$ für Wasserstoff, gegebenenfalls substituiertes Phenoxy oder gegebenenfalls substituiertes Benzyl stehen, oder

$R^1$ und $R^2$ gemeinsam für die Gruppierung =CH-Z stehen, wobei

Z für gegebenenfalls substituiertes Cycloalkyl oder gegebenenfalls substituiertes Phenyl steht,

$R^3$ für Alkyl, gegebenenfalls substituiertes Phenyl oder gegebenenfalls substituiertes Benzyl steht,

$R^4$ für Wasserstoff oder Alkyl steht und

$R^5$ für Wasserstoff oder Alkyl steht,

gefunden.

Die Verbindungen der Formel (I) können gegebenenfalls je nach Substitution, in verschiedenen geometrischen Isomeren (threo- und erythro- bzw. E- und Z-Form) sowie optischen Isomeren vorkommen; vorwiegend fallen sie als Gemische an.

Weiterhin wurde gefunden, dass man die phosphorylierten Azolyl-Derivate der allgemeinen Formel (I) erhält, wenn man die Hydroxyazolyl-Derivate der Formel

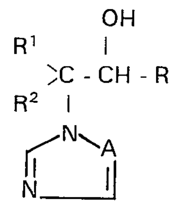

(II)

in welcher

A, $R^1$, $R^2$ und R die oben angegebene Bedeutung haben,

mit 2,5-Dioxo-1-oxa-2-phospholanen der Formel

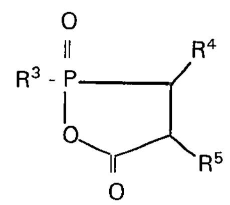

(III)

in welcher

$R^3$, $R^4$ und $R^5$ die oben angegebene Bedeutung haben,

in Gegenwart einer Base und gegebenenfalls in Gegenwart eines Verdünnungsmittels umsetzt.

Überraschenderweise zeigen die erfindungsgemässen Verbindungen der Formel (I) eine bessere fungizide Wirksamkeit als die aus dem Stand der Technik bekannten acylierten Triazolyl-Derivate 1-Chlorphenoxy-3,3-dimethyl-2-ethylcarbonyloxy- bzw. -2-acetoxy- bzw. -2-phenoxyacetoxy-1-(1,2,-4-triazol-1-yl)-butan oder 3-Acetoxy-1-cyclohexyl-4,4-dimethyl-2-(1,2,4-triazol-1-yl)-penten, welche konstitutionell und wirkungsmässig naheliegende Verbindungen sind. Die erfindungsgemässen Wirkstoffe stellen somit eine Bereicherung der Technik dar.

Die erfindungsgemässen phosphorylierten Azolyl-Derivate sind durch die Formel (I) allgemein definiert. In dieser Formel stehen vorzugsweise

A für ein Stickstoffatom oder die CH-Gruppe;

R für gegebenenfalls einfach bis dreifach, gleich oder verschieden durch Halogen und Alkyl mit 1 bis 4 Kohlenstoffatomen substituiertes Phenyl oder die Gruppierung

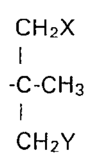

, wobei

X und Y gleich oder verschieden sind und für Wasserstoff oder Chlor stehen,

$R^1$ für Wasserstoff und

$R^2$ für Wasserstoff oder für jeweils gegebenenfalls einfach bis dreifach, gleich oder verschieden substituiertes Phenoxy und Benzyl, wobei als Substituenten genannt seien: Halogen, Alkyl mit 1 bis 4 Kohlenstoffatomen, Alkoxycarbonyl mit 1

bis 4 Kohlenstoffatomen im Alkylteil, Nitro oder gegebenenfalls durch Halogen substituiertes Phenyl;

$R^1$ und $R^2$ gemeinsam für die Gruppierung =CH-Z, wobei

Z für gegebenenfalls einfach bis dreifach, gleich oder verschieden substituiertes Cycloalkyl mit 5 bis 7 Kohlenstoffatomen steht, wobei als Substituenten Alkyl mit 1 bis 4 Kohlenstoffatomen und Halogen genannt seien; sowie für gegebenenfalls einfach bis dreifach gleich oder verschieden substituiertes Phenyl steht, wobei als Substituenten genannt seien: Halogen, Alkyl mit 1 bis 4 Kohlenstoffatomen und Halogenalkyl mit 1 bis 2 Kohlenstoff- und 1 bis 5 gleichen oder verschiedenen Halogenatomen, wie Fluor- und Chloratomen;

$R^3$ für Alkyl mit 1 bis 4 Kohlenstoffatomen oder gegebenenfalls einfach bis dreifach, gleich oder verschieden substituiertes Phenyl und Benzyl, wobei als Substituenten die unter Z bereits genannten Phenylsubstituenten in Frage kommen;

$R^4$ für Wasserstoff oder Alkyl mit 1 bis 4 Kohlenstoffatomen und

$R^5$ für Wasserstoff oder Alkyl mit 1 bis 4 Kohlenstoffatomen.

Besonders bevorzugt sind diejenigen Verbindungen der Formel (I), in denen

A für ein Stickstoffatom oder die CH-Gruppe steht;

R für gegebenenfalls einfach oder zweifach, gleich oder verschieden substituiertes Phenyl oder für die Gruppierung

$CH_2X$
I
$-C-CH_3$
I
$CH_2Y$ steht, wobei

X und Y gleich oder verschieden sind und für Wasserstoff Fluor oder Chlor stehen;

$R^1$ für Wasserstoff und

$R^2$ für Wasserstoff oder für jeweils gegebenenfalls einfach oder zweifach, gleich oder verschieden substituiertes Phenoxy oder Benzyl steht, wobei als Substituenten genannt seien: Fluor, Chlor, Methyl, Methoxycarbonyl Ethoxycarbonyl, Nitro, Phenyl, Chlorphenyl und Fluorphenyl;

$R^1$ und $R^2$ gemeinsam für die Gruppierung =CH-Z stehen, wobei

Z für jeweils gegebenenfalls durch Methyl substituiertes Cyclopentyl oder Cyclohexyl steht, sowie für gegebenenfalls einfach oder zweifach, gleich oder verschieden substituiertes Phenyl steht, wobei als Substituenten genannt seien: Fluor, Chlor, Methyl, tert.-Butyl und Trifluormethyl;

$R^3$ für Methyl, Ethyl oder jeweils gegebenenfalls einfach oder zweifach, gleich oder verschieden substituiertes Phenyl oder Benzyl steht, wobei als Substituenten die bei Z bereits genannten Phenylsubstituenten in Frage kommen;

$R^4$ für Wasserstoff, Methyl oder Ethyl steht und

$R^5$ für Wasserstoff, Methyl oder Ethyl steht.

Ganz besonders bevorzugt sind diejenigen Verbindungen der Formel (I), in denen

A für ein Stickstoffatom oder die CH-Gruppe steht;

R für einfach oder zweifach durch Chlor substituiertes Phenyl oder für die Gruppierung

$CH_2X$
I
$-C-CH_3$
I
$CH_2Y$ steht, wobei

X und Y gleich oder verschieden sind und für Wasserstoff, Fluor oder Chlor stehen;

$R^1$ für Wasserstoff und

$R^2$ für Wasserstoff oder für jeweils gegebenenfalls einfach bis zweifach, gleich oder verschiedenen substituiertes Phenoxy oder Benzyl steht, wobei als Substituenten Fluor, Chlor, Methyl und Phenyl genannt seien,

$R^1$ und $R^2$ gemeinsam für die Gruppierung =CH-Z stehen, wobei

Z für Cyclohexyl oder für gegebenenfalls einfach oder zweifach, gleich oder verschieden substituiertes Phenyl steht, wobei Chlor und Fluor als Substituenten genannt seien;

$R^3$ für Methyl steht und

$R^4$ und $R^5$ für Wasserstoff stehen.

Verwendet man beispielsweise 1-(4-Chlorphenoxy)-3,3-dimethyl-1-(1,2,4-triazol-1-yl)-2-butanol und 2-Methyl-2,5-dioxo-1-oxa-2-phospholan als Ausgangsstoffe, so kann der Reaktionsablauf des erfindungsgemässen Verfahrens durch das folgende Formelschema wiedergegeben werden:

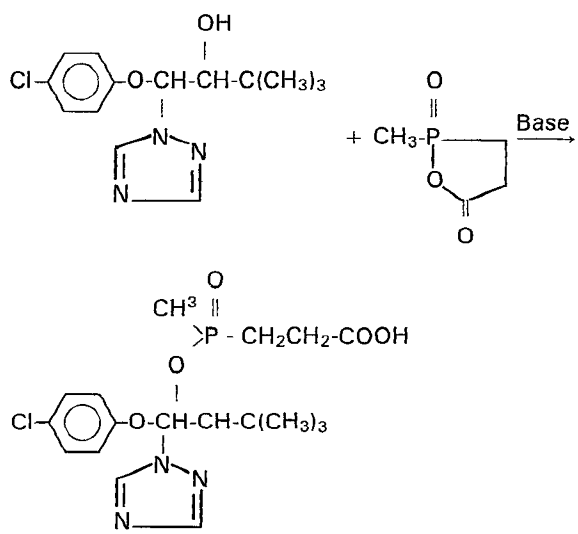


Die bei der Durchführung des erfindungsgemässen Verfahrens als Ausgangsstoffe benötigten Hydroxy-azolyl-Derivate sind durch die Formel (II) allgemein definiert. In dieser Formel haben A, $R^1$, $R^2$, X und Y vorzugsweise diejenigen Bedeutungen, die bereits im Zusammenhang mit der Beschreibung der erfindungsgemässen Stoffe der Formel (I) vorzugsweise für diese Reste genannt wurden.

Die Hydroxy-azolyl-Derivate der Formel (II) sind bekannt (vergleiche z.B. DE-PS 2 324 010, DE-OS 2 333 354, DE-OS 2 431 407, DE-OS 2 610 022, DE-OS 2 638 470, DE-OS 2 632 603, DE-OS

2 632 602, DE-OS 2 705 677, DE-OS 2 705 678, DE-OS 2 918 894, DE-OS 2 918 893, DE-OS 2 737 489, DE-OS 3 010 560, EP 0 032 200, EP 0 015 387, EP 0 044 425.

Die ausserdem für das erfindungsgemässe Verfahren als Ausgangsstoffe zu verwendenden 2,5-Dioxo-1-oxa-2-phospholane sind durch die Formel (III) allgemein definiert. In dieser Formel haben $R^3$, $R^4$ und $R^5$ vorzugsweise diejenigen Bedeutungen, die bereits im Zusammenhang mit der Beschreibung der erfindungsgemässen Stoffe der Formel (I) vorzugsweise für dieser Reste genannt wurden.

Die 2,5-Dioxo-1-oxa-2-phospholane der Formel (III) sind ebenfalls bekannt [vergleiche z.B. Ž.obšč. Chim. 37, (1967), S. 710-714 und DE-OS 2 346 787]; bzw. können sie nach den dort angegebenen Verfahren erhalten werden, indem man Dichlorphosphane der Formel

$$R^3 - PCl_2 \quad (IV)$$

in welcher

$R^3$ die oben angegebene Bedeutung hat,

mit ungesättigten Carbonsäuren der Formel

$$CHR^4 = CR^5 - COOH \quad (V)$$

in welcher

$R^4$ und $R^5$ die oben angegebene Bedeutung haben,

zu entsprechenden Dichloriden der Phosphinsäuren der Formel

$$R^3 - \underset{\underset{Cl}{|}}{\overset{\overset{O}{\|}}{P}} - CHR^4 - CHR^5 - CO - Cl \quad (VI)$$

in welcher

$R^3$, $R^4$ und $R^5$ die oben angegebenen Bedeutungen haben, umsetzt, die dann leicht mittels Acetanhydrid in die entsprechenden cyclischen Anhydride der Formel (II) umgewandelt werden können.

Das erfindungsgemässe Verfahren wird bevorzugt in Gegenwart einer Base als Katalysator durchgeführt. Hierzu gehören vorzugsweise organische Basen, wie tertiäre Amine, wie beispielsweise Triethylamin oder Tributylamin, oder wie Pyridin.

Das erfindungsgemässe Verfahren wird gegebenenfalls in Gegenwart eines Verdünnungsmittels durchgeführt. Hierzu gehören vorzugsweise unter den Reaktionsbedingungen inerte organische Lösungsmittel, wie insbesondere chlorierte aliphatische Kohlenwasserstoffe, beispielsweise Methylenchlorid oder Tetrachlorkohlenstoff, oder aromatische Kohlenwasserstoffe, beispielsweise Benzol oder Toluol.

Die Reaktionstemperaturen können bei der Durchführung des erfindungsgemässen Verfahrens in einem grösseren Bereich variiert werden. Im allgemeinen arbeitet man zwischen 20 und 150°C, vorzugsweise zwischen 25 und 110°C; bei der Verwendung eines Lösungsmittels vorzugsweise bei dessen Siedepunkt.

Bei der Durchführung des erfindungsgemässen Verfahrens setzt man auf 1 Mol Hydroxy-azolyl-Derivat der Formel (II) vorzugsweise einen geringen Überschuss (ca. 10 bis 30 Mol.-%) an 2,5-Dioxo-1-oxa-2-phospholan der Formel (III) und ebenfalls an Base ein. Zur Isolierung der Verbindungen der Formel (I) wird gegebenenfalls das Lösungsmittel abdestilliert und der Rückstand nach üblichen Methoden aufgearbeitet.

An die Verbindungen der Formel (I) kann gegebenenfalls in allgemein üblicher und an sich bekannter Weise eine starke Säure oder ein Metallsalz addiert werden.

Da die Verbindungen der Formel (I) eine freie Carboxylgruppe enthalten, ist es ebenfalls möglich, in an sich bekannter Art und Weise Salze durch Reaktion mit Basen zu erhalten.

Die erfindungsgemässen Wirkstoffe weisen eine starke mikrobizide Wirkung auf und können zur Bekämpfung von unerwünschten Mikroorganismen praktisch eingesetzt werden. Die Wirkstoffe sind für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Als Pflanzenschutzmittel können die erfindungsgemässen Wirkstoffe mit besonders gutem Erfolg zur Bekämpfung von Getreidekrankheiten, wie Puccinia recondita, Pyrenophora teres, Erysiphe graminis und Cochliobolus sativus; von Mehltauerkrankungen, wie Podosphaera leucotricha und Sphaerotheca fuliginea; sowie von Reiskrankheiten, wie Pyricularia oryzae und Pellicularia sasakii; eingesetzt werden.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinverkapselungen in polymeren Stoffen und in Hüllmassen für Saatgut, ferner in Formulierungen mit Brennsätzen, wie Räucherpatronen, -dosen, -spiralen u.ä. sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material, wie Sägemehl, Kokosnussschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäureester, Polyoxyethylen-Fettalkohol-ether, z.B. Alkylarylpolyglykol-ether, Alkylsulfonate, Alkylsulfate, Arylsulfonate sowie Eiweisshydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-, Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemässen Wirkstoffe können in den Formulierungen oder in den verschiedenen Anwendungsformen in Mischung mit anderen bekannten Wirkstoffen vorliegen, wie Fungiziden, Bakteriziden, Insektiziden, Akariziden, Nematiziden, Herbiziden, Schutzstoffen gegen Vogelfrass, Wuchsstoffen, Pflanzennährstoffen und Bodenstrukturverbesserungsmitteln.

Die Wirkstoffe können als solche, in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z.B. durch Giessen, Tauchen, Spritzen, Sprühen, Vernebeln, Verdampfen, Injizieren, Verschlämmen, Verstreichen, Stäuben, Streuen, Trockenbeizen, Feuchtbeizen, Nassbeizen, Schlämmbeizen oder Inkrustieren.

Bei der Behandlung von Pflanzenteilen können die Wirkstoffkonzentrationen in den Anwendungsformen in einem grösseren Bereich variiert werden. Sie liegen im allgemeinen zwischen 1 und 0,0001 Gew.-%, vorzugsweise zwischen 0,5 und 0,001%.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,00001 bis 0,1 Gew.-%, vorzugsweise von 0,0001 bis 0,02 Gew.-%, am Wirkungsort erforderlich.

*Herstellungsbeispiele*

*Beispiel 1*

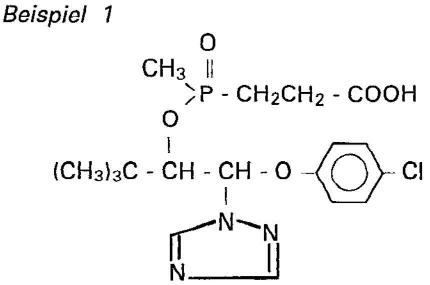

(mit Lösungsmittel)

118,4 g (0,4 Mol) 1-(4-Chlorphenoxy)-3,3-dimethyl-1-(1,2,4-triazol-1-yl)-2-butanol, 67 g (0,5 Mol) 2-Methyl-2,5-dioxo-1-oxa-2-phospholan und 49,5 g (0,5 Mol) Triethylamin werden in 1000 ml wasserfreiem Methylenchlorid unter Feuchtigkeitsausschluss 10 Stunden unter Rückfluss erhitzt. Danach wird durch Abdestillieren des Lösungsmittels eingeengt und der Rückstand in 10%iger Natriumhydrogencarbonatlösung aufgelöst. Man filtriert von ungelösten Anteilen ab, stellt mit 10%iger Salzsäure auf pH 3, extrahiert zweimal mit Methylenchlorid, trocknet die vereinigten organischen Phasen über Natriumsulfat, filtriert und engt im Vakuum ein. Man erhält 155 g des o.g. Beispiels 1 von glasartiger Konsistenz.

(ohne Lösungsmittel)

29,6 g (0,1 Mol) 1-(4-Chlorphenoxy)-3,3-dimethyl-1-(1,2,4-triazol-1-yl)-2-butanol, 14,7 g (0,11 Mol) 2-Methyl-2,5-dioxo-1-oxa-2-phospholan und 10,9 g (0,11 Mol) Triethylamin werden unter Stickstoffatmosphäre und unter Feuchtigkeitsausschluss 10 Stunden bei 90°C erhitzt. Man lässt abkühlen, löst das Reaktionsgemisch in 10%iger Natriumhydrogencarbonatlösung, filtriert von ungelösten Anteilen ab und stellt mit 10%iger Salzsäure auf pH 3 ein. Danach wird mit Methylenchlorid extrahiert, über Natriumsulfat getrocknet, filtriert und im Vakuum eingeengt. Man erhält 31 g des o.g. Beispiels 1 von glasartiger Konsistenz.

In entsprechender Weise und gemäss dem angegebenen Verfahren werden die folgenden Verbindungen der allgemeinen Formel

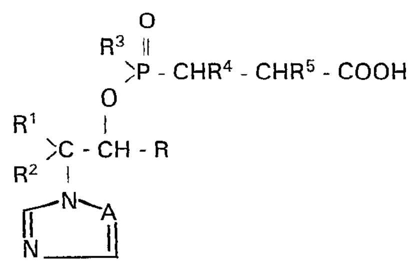

(I)

erhalten:

| Bsp. Nr. | R | $R^1$ | $R^2$ | $R^3$ | $R^4$ | $R^5$ | A | physikal. Konstante |
|---|---|---|---|---|---|---|---|---|
| 2 | $-C(CH_3)_3$ | H | 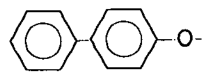 | $CH_3$ | H | H | N | glasartig |
| 3 | $-C(CH_3)_3$ | | 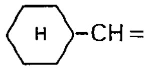 | $CH_3$ | H | H | N | glasartig |
| 4 | $-C(CH_3)_3$ | H | 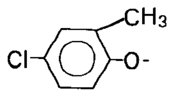 | $CH_3$ | H | H | N | glasartig |
| 5 | $-C(CH_3)_3$ | H | 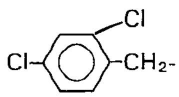 | $CH_3$ | H | H | N | glasartig |
| 6 | $-C(CH_3)_3$ | H | 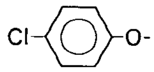 | $Ch_3$ | H | H | CH | glasartig |
| 7 | $-C(CH_3)_2CH_2Cl$ | H | 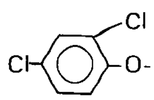 | $Ch_3$ | H | H | CH | glasartig |
| 8 | $-C(CH_3)_2CH_2F$ | H | 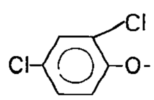 | $CH_3$ | H | H | CH | glasartig |
| 9 | $-C(CH_3)_3$ | H | 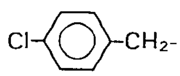 | $CH_3$ | H | H | N | glasartig |
| 10 | $-C(CH_3)_2CH_3F$ | H | 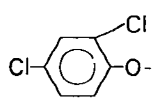 | $CH_3$ | H | H | N | glasartig |
| 11 | $-C(CH_3)_2CH_2Cl$ | H | 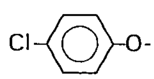 | $CH_3$ | H | H | N | glasartig |
| 12 | $-C(CH_3)_2CH_2Cl$ | H | 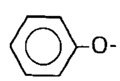 | $CH_3$ | H | H | N | glasartig |
| 13 | 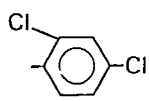 | H | 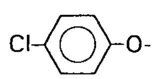 | $CH_3$ | H | H | CH | glasartig |

Zu obigen Beispielen seien folgende charakteristichen Spektraldaten genannt:

Beispiel 1:

$^1$H-NMR: $\delta$ = 9,25 $CO_2H$ 1H
$\delta$ = 4,9-4,7 $POCR_2H$ 1H

IR: $\tilde{\nu}$ = 3500-2800 $cm^{-1}$ $CO_2H$
$\tilde{\nu}$ = 1250 $cm^{-1}$ $R_3PO$

Beispiel 2:

IR: $\tilde{\nu}$ = 3400 $cm^{-1}$ $CO_2H$
$\tilde{\nu}$ = 1720 $cm^{-1}$ C=O
$\tilde{\nu}$ = 1230 $cm^{-1}$ $R_3PO$

$^1$H-NMR: $\delta$ = 10,2 ppm $CO_2H$
$\delta$ = 5,0-4,75 ppm $POCR_2H$

Beispiel 3:

IR: $\tilde{\nu}$ = 3400 $cm^{-1}$ $CO_2H$
$\tilde{\nu}$ = 1720 $cm^{-1}$ C=O
$\tilde{\nu}$ = 1200 $cm^{-1}$ $R_3PO$

Beispiel 5:

IR: $\tilde{\nu}$ = 3400 $cm^{-1}$ $CO_2H$
$\tilde{\nu}$ = 1720 $cm^{-1}$ C=O
$\tilde{\nu}$ = 1200 $cm^{-1}$ $R_3PO$

$^1$H-NMR: $\delta$ = 4,65-4,3 ppm $POCR_2H$
$\delta$ = 1,8-1,55 ppm $R_3P-CH_3$

*Anwendungsbeispiele*

In den folgenden Anwendungsbeispielen werden die nachstehend angegebenen Verbindungen als Vergleichssubstanzen eingesetzt:

(A) 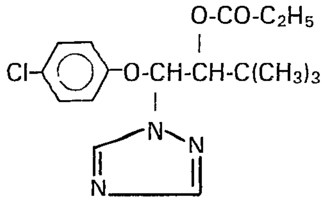

(B) 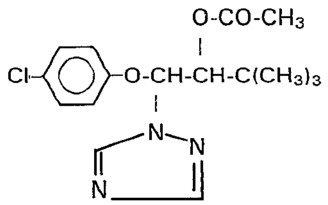

(C) 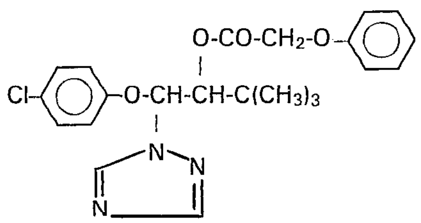

(D) 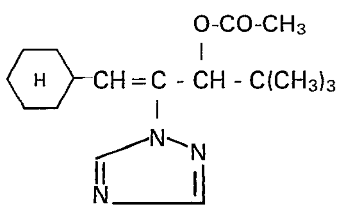

*Beispiel A*
Puccinia-Test (Weizen) / protektiv

Lösungsmittel:
100 Gewichtsteile Dimethylformamid
Emulgator:
0,25 Gewichtsteile Alkylarylpolyglykolether

Zur Herstellung einer zweckmässigen Wirkstoffzubereitung vermischt man 1 Gew.-Teil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit einer Sporensuspension von Puccinia recondita in einer 0,1%igen wässrigen Agarlösung inokuliert. Nach Antrocknen besprüht man die Pflanzen mit der Wirkstoffzubereitung taufeucht. Die Pflanzen verbleiben 24 Stunden bei 20°C und 100% rel. Luftfeuchtigkeit in einer Inkubationskabine.

Die Pflanzen werden in einem Gewächshaus bei einer Temperatur von ca. 20°C und einer relativen Luftfeuchtigkeit von ca. 80% aufgestellt, um die Entwicklung von Rostpusteln zu begünstigen.

10 Tage nach der Inokulation erfolgt die Auswertung.

Eine deutliche Überlegenheit in der Wirksamkeit gegenüber dem Stand der Technik zeigen bei diesem Test z.B. die Verbindungen gemäss folgender Herstellungsbeispiele: 1.

*Beispiel B*
Pyrenophora teres-Test (Gerste) / protektiv

Lösungsmittel:
100 Gewichtsteile Dimethylformamid
Emulgator:
0,25 Gewichtsteile Alkylarylpolyglykolether

Zur Herstellung einer zweckmässigen Wirkstoffzubereitung vermischt man 1 Gew.-Teil Wirkstoff mit den angegebenen Mengen Lösungsmittel und Emulgator und verdünnt das Konzentrat mit Wasser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen mit einer Konidiensuspension von Pyrenophora teres besprüht. Die Pflanzen verbleiben 48 Stunden bei 20°C und 100% relativer Luftfeuchtigkeit in einer Inkubationskabine.

Die Pflanzen werden in einem Gewächshaus bei einer Temperatur von ca. 20°C und einer relativen Luftfeuchtigkeit von ca. 80% aufgestellt.

7 Tage nach der Inokulation erfolgt die Auswertung.

Eine deutliche Überlegenheit in der Wirksamkeit gegenüber dem Stand der Technik zeigen bei diesem Test z.B. die Verbindungen gemäss folgender Herstellungsbeispiele: 3.

*Beispiel C*
Podosphaera-Test (Apfel) / protektiv

Lösungsmittel:
4,7 Gewichtsteile Aceton
Emulgator:
0,3 Gewichtsteile Alkylarylpolyglykolether

Zur Herstellung einer zweckmässigen Wirkstoffzubereitung vermischt man 1 Gew.-Teil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen durch Bestäuben mit Konidien des Apfelmehltauererregers (Podosphaera leucotricha) inokuliert.

Die Pflanzen werden in einem Gewächshaus bei 23°C und einer relativen Luftfeuchtigkeit von ca. 70% aufgestellt.

9 Tage nach der Inokulation erfolgt die Auswertung.

Eine deutliche Überlegenheit in der Wirksamkeit gegenüber dem Stand der Technik zeigen in diesem Test z.B. die Verbindungen gemäss folgender Herstellungsbeispiele: 1.

*Beispiel D*

Sphaerotheca-Test (Gurke) / protektiv

Lösungsmittel:
4,7 Gewichtsteile Aceton
Emulgator:
0,3 Gewichtsteile Alkylarylpolyglykolether

Zur Herstellung einer zweckmässigen Wirkstoffzubereitung vermischt man 1 Gew.-Teil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen mit Konidien des Pilzes Sphaerotheca fuliginea bestäubt.
Die Pflanzen werden anschliessend bei 23 bis 24°C und bei einer relativen Luftfeuchtigkeit von ca. 75% im Gewächshaus aufgestellt.

10 Tage nach der Inokulation erfolgt die Auswertung.

Eine deutliche Überlegenheit in der Wirksamkeit gegenüber dem Stand der Technik zeigen in diesem Test z.B. die Verbindungen gemäss folgender Herstellungsbeispiele: 1.

**Patentansprüche**

1. Phosphorylierte Azolyl-Derivate der allgemeinen Formel

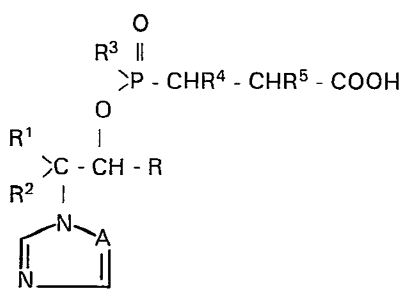

(I)

in welcher

A für ein Stickstoffatom oder die CH-Gruppe steht,

R für gegebenenfalls substituiertes Phenyl oder die Gruppierung

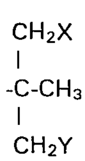

steht, wobei

X und Y gleich oder verschieden sind und für Wasserstoff oder Halogen stehen,

$R^1$ für Wasserstoff und

$R^2$ für Wasserstoff, gegebenenfalls substituiertes Phenoxy oder gegebenenfalls substituiertes Benzyl stehen, oder

$R^1$ und $R^2$ gemeinsam für die Gruppierung =CH-Z stehen, wobei

Z für gegebenenfalls substituiertes Cycloalkyl oder gegebenenfalls substituiertes Phenyl steht,

$R^3$ für Alkyl, gegebenenfalls substituiertes Phenyl oder gegebenenfalls substituiertes Benzyl steht,

$R^4$ für Wasserstoff oder Alkyl steht und

$R^5$ für Wasserstoff oder Alkyl steht.

2. Verbindungen der Formel (I) in Anspruch 1, wobei

A für ein Stickstoffatom oder die CH-Gruppe;

R für gegebenenfalls einfach bis dreifach, gleich oder verschieden durch Halogen und Alkyl mit 1 bis 4 Kohlenstoffatomen substituiertes Phenyl steht oder für die Gruppierung

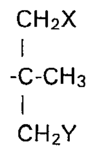

, wobei

X und Y gleich oder verschieden sind und für Wasserstoff, Fluor oder Chlor stehen;

$R^1$ für Wasserstoff steht,

$R^2$ für Wasserstoff oder für jeweils gegebenenfalls einfach bis dreifach, gleich oder verschieden durch Halogen, Alkyl mit 1 bis 4 Kohlenstoffatomen, Alkoxycarbonyl mit 1 bis 4 Kohlenstoffatomen im Alkylteil, Nitro oder gegebenenfalls halogen-substituiertes Phenyl substituiertes Phenoxy oder Benzyl steht, oder

$R^1$ und $R^2$ gemeinsam für die Gruppierung =CH-Z stehen, wobei

Z für gegebenenfalls einfach bis dreifach, gleich oder verschieden durch Alkyl mit 1 bis 4 Kohlenstoffatomen oder Halogen substituiertes Cycloalkyl mit 5 bis 7 Kohlenstoffatomen steht, sowie für gegebenenfalls einfach bis dreifach gleich oder verschieden durch Halogen, Alkyl mit 1 bis 4 Kohlenstoffatomen und Halogenalkyl mit 1 oder 2 Kohlenstoff- und 1 bis 5 gleichen oder verschieden Halogenatomen substituiertes Phenyl steht,

$R^3$ für Alkyl mit 1 bis 4 Kohlenstoffatomen oder für gegebenenfalls einfach bis dreifach, gleich oder verschieden substituiertes Phenyl und Benzyl steht, wobei als Substituenten die unter Z bereits genannten Phenylsubstituenten in Frage kommen;

$R^4$ für Wasserstoff oder Alkyl mit 1 bis 4 Kohlenstoffatomen steht und

$R^5$ für Wasserstoff oder Alkyl mit 1 bis 4 Kohlenstoffatomen steht.

3. Verbindungen der Formel (I) in Anspruch 1 wobei

A für ein Stickstoffatom oder die CH-Gruppe steht;

R für gegebenenfalls einfach oder zweifach, gleich oder verschieden substituiertes Phenyl oder für die Gruppierung

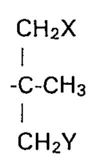

steht, wobei

X und Y gleich oder verschieden sind und für Wasserstoff, Fluor oder Chlor stehen,

$R^1$ für Wasserstoff steht und

$R^2$ für Wasserstoff oder für jeweils gegebenenfalls einfach oder zweifach, gleich oder verschieden durch Fluor, Chlor, Methyl, Methoxycarbonyl, Ethoxycarbonyl, Nitro, Phenyl, Chlorphenyl und Fluorphenyl substituiertes Phenoxy oder Benzyl steht, und weiterhin können

$R^1$ und $R^2$ gemeinsam für die Gruppierung =CH-Z stehen, wobei

Z für jeweils gegebenenfalls durch Methyl substituiertes Cyclopentyl oder Cyclohexyl steht, sowie für gegebenenfalls einfach oder zweifach, gleich oder verschieden durch Fluor, Chlor, Methyl, tert.-Butyl und Trifluormethyl substituiertes Phenyl steht,

$R^3$ für Methyl, Ethyl oder jeweils gegebenenfalls einfach oder zweifach, gleich oder verschieden substituiertes Phenyl oder Benzyl steht, wobei als Substituenten die bei Z bereits genannten Phenylsubstituenten in Frage kommen,

$R^4$ für Wasserstoff, Methyl oder Ethyl steht und

$R^5$ für Wasserstoff, Methyl oder Ethyl steht.

4. Verfahren zur Herstellung von phosphorylierten Azolyl-Derivaten der allgemeinen Formel

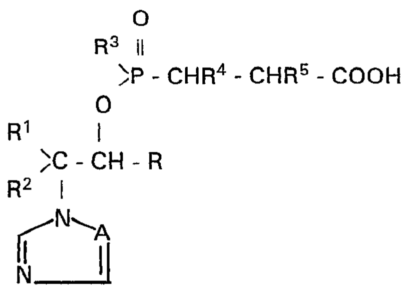

(I)

in welcher

A für ein Stickstoffatom oder die CH-Gruppe steht,

R für gegebenenfalls substituiertes Phenyl oder die Gruppierung

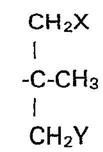

steht, wobei

X und Y gleich oder verschieden sind und für Wasserstoff oder Halogen stehen,

$R^1$ für Wasserstoff und

$R^2$ für Wasserstoff, gegebenenfalls substituiertes Phenoxy oder gegebenenfalls substituiertes Benzyl stehen, oder

$R^1$ und $R^2$ gemeinsam für die Gruppierung =CH-Z stehen, wobei

Z für gegebenenfalls substituiertes Cycloalkyl oder gegebenenfalls substituiertes Phenyl steht,

$R^3$ für Alkyl, gegebenenfalls substituiertes Phenyl oder gegebenenfalls substituiertes Benzyl steht,

$R^4$ für Wasserstoff oder Alkyl steht und

$R^5$ für Wasserstoff oder Alkyl steht,

dadurch gekennzeichnet, dass man Hydroxy-azolyl-Derivate der Formel

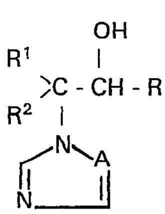

(II)

in welcher

A, $R^1$, $R^2$ und R die oben angegebene Bedeutung haben,

mit 2,5-Dioxo-1-oxa-2-phospholanen der Formel

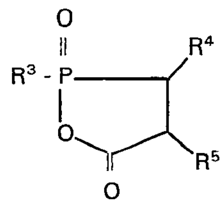

(III)

in welcher

$R^3$, $R^4$ und $R^5$ die oben angegebene Bedeutung haben,

in Gegenwart einer Base und gegebenenfalls in Gegenwart eines Verdünnungsmittels umsetzt.

5. Fungizide Mittel, gekennzeichnet durch einen Gehalt an mindestens einem phosphorylierten Azolyl-Derivat der Formel (I) nach Anspruch 1 und 4.

6. Verfahren zur Bekämpfung von Pilzen, dadurch gekennzeichnet, dass man phosphorylierte Azolyl-Derivate der Formel (I) nach Anspruch 1 und 4 auf Pilze oder ihren Lebensraum einwirken lässt.

7. Verwendung von phosphorylierten Azolyl-Derivaten der Formel (I) nach Anspruch 1 und 4 zur Bekämpfung von Pilzen.

8. Verwendung von phosphorylierten Azolyl-Derivaten der Formel (I) nach Anspruch 1 und 4 als Pflanzenschutzmittel.

9. Verfahren zur Herstellung von fungiziden Mitteln, dadurch gekennzeichnet, dass man phosphorylierte Azolyl-Derivate der Formel (I) nach Anspruch 1 und 4 mit Streckmitteln und/oder oberflächenaktiven Mitteln vermischt.

**Claims**

1. Phosphorylated azolyl derivatives of the general formula

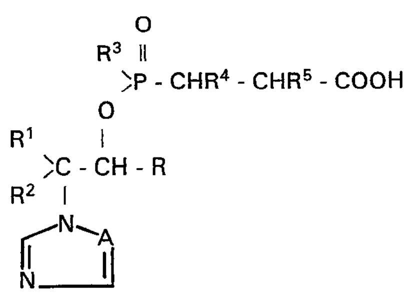

(I)

in which

A represents a nitrogen atom or the CH group,

R represents optionally substituted phenyl or the grouping

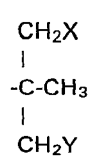

wherein

X and Y are identical or different and represent hydrogen or halogen,
$R^1$ represents hydrogen and
$R^2$ represents hydrogen, optionally substituted phenoxy or optionally substituted benzyl, or
$R^1$ and $R^2$ together represent the grouping =CH-Z,
wherein
Z represents optionally substituted cycloalkyl or optionally substituted phenyl,
$R^3$ represents alkyl, optionally substituted phenyl or optionally substituted benzyl,
$R^4$ represents hydrogen or alkyl and
$R^5$ represents hydrogen or alkyl.

2. Compounds of the formula (I) in claim 1, wherein
A represents a nitrogen atom or the CH group;
R represents phenyl which is optionally mono- to tri-substituted by identical or different substituents from the group comprising halogen and alkyl with 1 to 4 carbon atoms, or represents the grouping

$CH_2X$
I
$-C-CH_3$
I
$CH_2Y$

wherein
X and Y are identical or different and represents hydrogen, fluorine or chlorine;
$R^1$ represents hydrogen and
$R^2$ represents hydrogen or phenoxy or benzyl, each of which is optionally mono- to tri-substituted by identical or different substituents from the group comprising halogen, alkyl with 1 to 4 carbon atoms, alkoxycarbonyl with 1 to 4 carbon atoms in the alkyl part, nitro and optionally halogen-substituted phenyl, or
$R^1$ and $R^2$ together represent the grouping =CH-Z,
wherein
Z represents cycloalkyl which has 5 to 7 carbon atoms and is optionally mono- to tri-substituted by identical or different substituents from the group comprising alkyl with 1 to 4 carbon atoms and halogen, or represents phenyl which is optionally mono- to tri-substituted by identical or different substituents from the group comprising halogen, alkyl with 1 to 4 carbon atoms and halogenalkyl with 1 or 2 carbon atoms and 1 to 5 identical or different halogen atoms,
$R^3$ represents alkyl with 1 to 4 carbon atoms, or phenyl or benzyl, optionally mono-tri-substituted by identical or different substituents, possible substituents being the substituents on phenyl which have already been mentioned under Z,
$R^4$ represents hydrogen or alkyl with 1 to 4 carbon atoms and
$R^5$ represents hydrogen or alkyl with 1 to 4 carbon atoms.

3. Compounds of the formula (I) in claim 1, wherein
A represents a nitrogen atom or the CH group;
R represents phenyl which is optionally mono- or di-substituted by identical or different substituents, or represents the grouping

$CH_2X$
I
$-C-CH_3$
I
$CH_2Y$

wherein
X and Y are identical or different and represents hydrogen, fluorine or chlorine,
$R^1$ represents hydrogen and
$R^2$ represents hydrogen or phenoxy or benzyl, each of which is optionally mono- or di-substituted by identical or different substituents from the group comprising fluorine, chlorine, methyl, methoxycarbonyl, ethoxycarbonyl, nitro, phenyl, chlorophenyl and fluorophenyl, and furthermore
$R^1$ and $R^2$ can together represent the grouping =CH-Z,
wherein
Z represents cyclopentyl or cyclohexyl, each of which is optionally substituted by methyl, or represents phenyl which os optionally mono- or di-substituted by identical or different substituents from the group comprising fluorine, chlorine, methyl, tert.-butyl and trifluoromethyl,
$R^3$ represents methyl or ethyl, or phenyl or benzyl, each of which is optionally mono- or di-substituted by identical or different substituents, possible substituents being the substituents on phenyl which have already been mentioned for Z,
$R^4$ represents hydrogen, methyl or ethyl and
$R^5$ represents hydrogen, methyl or ethyl.

4. Process for the preparation of phosphorylated azolyl derivatives of the general formula

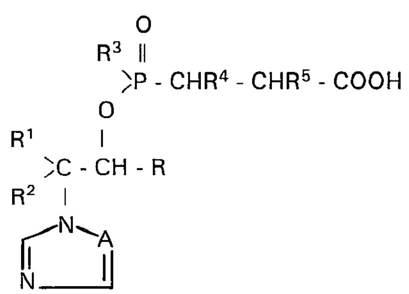

(I)

in which
A represents a nitrogen atom or the CH group,
R represents optionally substituted phenyl or the grouping

$CH_2X$
I
$-C-CH_3$
I
$CH_2Y$

wherein
X and Y are identical or different and represent hydrogen or halogen,
$R^1$ represents hydrogen and
$R^2$ represents hydrogen, optionally substituted phenoxy or optionally substituted benzyl, or

$R^1$ and $R^2$ together represent the grouping =CH-Z,

wherein

Z represents optionally substituted cycloalkyl or optionally substituted phenyl,

$R^3$ represents alkyl, optionally substituted phenyl or optionally substituted benzyl,

$R^4$ represents hydrogen or alkyl and

$R^5$ represents hydrogen or alkyl,

characterised in that hydroxy-azolyl derivatives of the formula

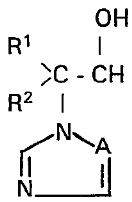

(II)

in which

A, $R^1$, $R^2$ and R have the abovementioned meaning,

are reacted with 2,5-dioxo-1-oxa-2-phospholanes of the formula

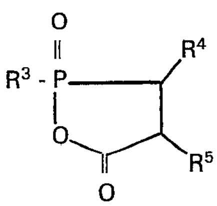

(III)

in which

$R^3$, $R^4$ and $R^5$ have the abovementioned meaning, in the presence of a base and if appropriate in the presence of a diluent.

5. Fungicidal agents, characterised in that they contain at least one phosphorylated azolyl derivative of the formula (I) according to claim 1 and 4.

6. Method of combating fungi, characterised in that phosphorylated azolyl derivatives of the formula (I) according to claim 1 and 4 are allowed to act on fungi or their environment.

7. Use of phosphorylated azolyl derivatives of the formula (I) according to claim 1 and 4 for combating fungi.

8. Use of phosphorylated azolyl derivatives of the formula (I) according to claim 1 and 4 as plant protection agents.

9. Process for the preparation of fungicidal agents, characterised in that phosphorylated azolyl derivatives of the formula (I) according to claim 1 and 4 are mixed with extenders and/or surface-active agents.

## Revendications

1. Dérivés d'azolyle phosphorylés de formule générale

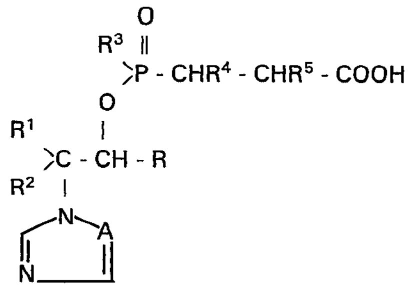

(I)

dans laquelle

A représente un atome d'azote ou le groupe CH,

R est un groupe phényle éventuellement substitué ou le groupement

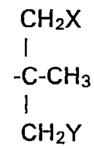

dans lequel

X et Y sont identiques ou différents et représentent l'hydrogène ou un halogène,

$R^1$ est l'hydrogène et

$R^2$ est l'hydrogène, un groupe phénoxy éventuellement substitué ou un groupe benzyl éventuellement substitué, ou bien

$R^1$ et $R^2$ forment ensemble le groupement =CH-Z,

dans lequel

Z représente un groupe cycloalkyle éventuellement substitué ou un groupe phényle éventuellement substitué,

$R^3$ est un groupe alkyle, un groupe phényle éventuellement substitué ou un groupe benzyle éventuellement substitué,

$R^4$ est l'hydrogène ou un groupe alkyle et

$R^5$ est l'hydrogène ou un groupe alkyle.

2. Composé de formule (I) suivant la revendication 1, dans lesquels

A désigne un atome d'azote ou le groupe CH;

R est un groupe phényle portant éventuellement 1 à 3 substituants halogéno et alkyle en $C_1$ à $C_4$ identiques ou différents ou le groupement

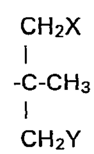

dans lequel

X et Y sont égaux ou différents et représentent l'hydrogène, le fluor ou le chlore;

$R^1$ est l'hydrogène,

$R^2$ est l'hydrogène ou représente un groupe phénoxy ou un groupe benzyle portant chacun éventuellement 1 à 3 substituants, identiques ou différents halogéno, alkyle ayant 1 à 4 atomes de carbone, alkoxycarbonyle ayant 1 à 4 atomes de carbone dans la partie alkyle, nitro ou phényle éventuellement substitué par un halogène, ou bien

$R^1$ et $R^2$ forment ensemble le groupement =CH-Z,
dans lequel
Z désigne un groupe cycloalkyle ayant 5 à 7 atomes de carbone portant éventuellement 1 à 3 substituants, identiques ou différents, alkyle ayant 1 à 4 atomes de carbone ou halogéno, ainsi qu'un groupe phényle portant éventuellement 1 à 3 substituants, identiques ou différents, halogéno, alkyle ayant 1 à 4 atomes de carbone et halogénalkyle ayant 1 ou 2 atomes de carbone et 1 à 5 atomes d'halogènes identiques ou différents,
$R^3$ est un groupe alkyle ayant 1 à 4 atomes de carbone ou un groupe phényle ou benzyle portant éventuellement 1 à 3 substituants identiques ou différents, et on considère alors comme substituants les substituants du groupe phényle déjà indiqués pour Z,
$R^4$ est l'hydrogène ou un groupe alkyle ayant 1 à 4 atomes de carbone, et
$R^5$ est l'hydrogène ou un groupe alkyle ayant 1 à 4 atomes de carbone.

3. Composé de formule (I) suivant la revendication 1, dans lesquels
A est un atome d'azote ou le groupe CH;
R est un groupe phényle portant éventuellement un ou deux substituants égaux ou différents, ou le groupement

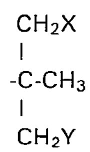

dans lequel
X et Y sont identiques ou différents et représentent de l'hydrogène, du fluor ou du chlore,
$R^1$ représente l'hydrogène et
$R^2$ représente l'hydrogène ou un groupe phénoxy ou benzyle portant chacun éventuellement un ou deux substituants identiques ou différents tels que fluor, chlore, méthyle méthoxycarbonyle, éthoxycarbonyle, nitro, phényle, chlorophényle et fluorophényle, et en outre,
$R^1$ et $R^2$ peuvent formr conjointement le groupement =CH-Z,
dans lequel
Z répresente un groupe cyclopentyle ou cyclohexyle portant chacun éventuellement un substituant méthyle, ainsi qu'un groupe phényle portant éventuellement un ou deux substituants identiques ou différents, tels que fluor, chlore, méthyle, tertiobutyle et trifluorométhyle,
$R^3$ est un groupe méthyle, un groupe éthyle ou un groupe phényle ou benzyle portant chacun le cas échéant un ou deux substituants identiques ou différents, et on considère alors comme substituants les substituants du groupe phényle déjà mentionnés dans le cas de Z,
$R^4$ est l'hydrogène, le groupe méthyle ou le groupe éthyle et
$R^5$ est l'hydrogène, le groupe méthyle ou le groupe éthyle.

4. Procédé de production de dérivés d'azolyle phosphorylés de formule générale

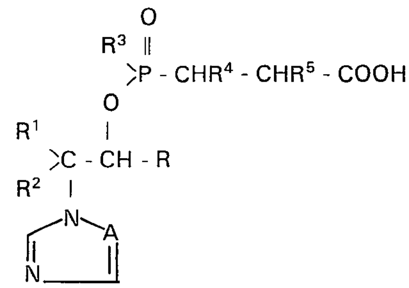
(I)

dans laquelle
A représente un atome d'azote ou le groupe CH,
R est un groupe phényle éventuellement substitué ou le groupement

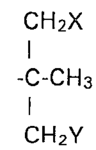

dans lequel
X et Y sont identiques ou différents et représentent l'hydrogène ou un halogène,
$R^1$ est l'hydrogène et
$R^2$ est l'hydrogène, un groupe phénoxy éventuellement substitué ou un groupe benzyle éventuellement substitué, ou bien
$R^1$ et $R^2$ forment ensemble le groupement =CH-Z,
dans lequel
Z représente un groupe cycloalkyle éventuellement substitué ou un groupe phényle éventuellement substitué,
$R^3$ est un groupe alkyle, un groupe phényle éventuellement substitué ou un groupe benzyle éventuellement substitué,
$R^4$ est l'hydrogène ou un groupe alkyle et
$R^5$ est l'hydrogène ou un groupe alkyle,
caractérisé en ce qu'on fait réagir en présence d'une base et le cas échéant en présence d'un diluant, des dérivés d'hydroxyazolyle de formule

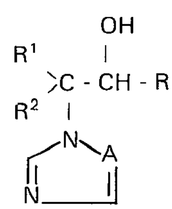
(II)

dans laquelle
A, $R^1$, $R^2$ et R ont la définition indiquée ci-dessus, avec des 2,5-dioxo-1-oxa-2-phospholanes de formule

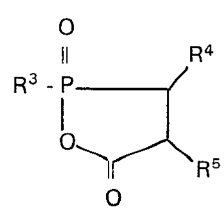
(III)

dans laquelle

$R^3$, $R^4$ et $R^5$ ont la définition indiquée ci-dessus.

5. Compositions fongicides, caractérisées par une teneur en au moins un dérivé d'azolyle phosphorylé de formule (I) suivant les revendications 1 et 4.

6. Procédé pour combattre des champignons, caractérisé en ce qu'on fait agir des dérivés d'azolyle phosphorylés de formule (I) suivant les revendications 1 et 4 sur des champignons ou sur leur milieu.

7. Utilisation de dérivés d'azolyle phosphorylés de formule (I) suivant les revendications 1 et 4 pour combattre des champignons.

8. Utilisation de dérivés d'azolyle phosphorylés de formule (I) suivant les revendications 1 et 4 comme agents phytosanitaires.

9. Procédé de préparation de compositions fongicides, caractérisé en ce qu'on mélange des dérivés d'azolyle phosphorylés de formule (I) suivant les revendications 1 et 4 avec des diluants et/ou des agents tensio-actifs.